# EUROPEAN PATENT APPLICATION

(11) **EP 2 690 397 A1**
(43) Date of publication of application: **29.01.2014**
(21) Application number: 13173171.3
(22) Date of filing: 21.06.2013
(51) Int. Cl.: G01B 11/24, G06T 7/00, G06T 17/00

(54) **Use of color and intensity modulation of pixel displays in 3D-shape measurement**

(30) Priority: 25.07.2012 US 201261675525 P; 10.10.2012 US 201213648393
(71) Applicant: Google Inc., Mountain View, CA 94043 (US)
(72) Inventor: Kuffner, James J., Mountain View, CA California 94043 (US); Poursohi, Arshan, Mountain View, CA California 94043 (US); Gharpure, Chaitanya, Mountain View, CA California 94043 (US); Hickman, Ryan, Mountain View, CA California 94043 (US)
(74) Representative: Kennedy, Richard E.

(57) **Abstract**

Methods and systems for using a mobile device with a multi-element display, a camera, and a controller to determine a 3D model of a target object. The multi-element display is configured to generate a light field. At least a portion of the light field reflects from a target object. The camera is configured to capture a plurality of images based on the portion of the light field reflected from the target object. The controller is configured to determine a 3D model of the target object based on the images. The 3D model includes three-dimensional shape and color information about the target object. In some embodiments, the light field may include specific light patterns, spectral content, and other forms of modulated/structured light.

## Description

### FIELD

The present disclosure relates to a mobile device comprising a multi-element display, a camera, and a controller to determine, based on a 3D model, at least one of a shape of a target object, an appearance of a target object and a material of a target object. The present disclosure also relates to an associated method and non-transitory computer readable medium.

### BACKGROUND

In computer graphics, three-dimensional (3D) modeling involves generation of a representation of a 3D surface of an object. The representation may be referred to as a 3D object data model, or simply a 3D model, and can be rendered or displayed as a two-dimensional image via 3D rendering or displayed as a three-dimensional image. A 3D object data model may represent a 3D object using a collection of points in 3D space, connected by various geometric entities such as triangles, lines, curved surfaces, etc. Various techniques exist for generating 3D object data models utilizing point clouds and geometric shapes.

### SUMMARY

In a first aspect, a mobile device is provided. The mobile device includes a multi-element display, a camera, and a controller. The multi-element display is configured to generate a light field. At least a portion of the light field reflects from a target object. The camera is configured to capture a plurality of images based on the portion of the light field reflected from the target object. The camera is further configured to capture the plurality of images synchronized to at least one modulation of the light field. The controller is configured to receive a 3D model of the target object based on the plurality of images. The 3D model includes three-dimensional shape and color information about the target object. The controller is further configured to determine, based on the 3D model, at least one shape of the target object, an appearance of the target object, and a material of the target object.

In a second aspect, a method is provided. The method includes illuminating a target object with a mobile device. The mobile device includes a multi-element display and a camera. The multi-element display is configured to generate a modulated light field. The modulated light field illuminates the target object. The method includes capturing, using the camera, a plurality of images of the target object. The capture of the plurality of images is configured to be synchronized to at least one modulation of the modulated light field. The method further includes receiving a 3D model of the target object based on the plurality of images. The 3D model includes three-dimensional shape and color information about the target object. The method additionally includes determining, based on the 3D model, at least one of a shape of the target object, an appearance of the target object, and a material of the target object.

In a third aspect, a non-transitory computer readable medium is provided. The non-transitory computer readable medium includes instructions executable by a computing device to cause the computing device to perform functions, the functions including illuminating a target object with a computing device. The computing device includes a multi-element display and a camera. The multi-element display is configured to generate a light field. The light field illuminates the target object. The functions include capturing, using the camera, a plurality of images of the target object. The functions further include receiving a 3D model of the target object based on the plurality of images. The 3D model includes three-dimensional shape and color information about the target object. The functions additionally include determining, based on the 3D model, at least one of a shape of the target object, an appearance of the target object, and a material of the target object.

The foregoing summary is illustrative only and is not intended to be in any way limiting. In addition to the illustrative aspects, embodiments, and features described above, further aspects, embodiments, and features will become apparent by reference to the figures and the following detailed description.

### BRIEF DESCRIPTION OF THE DRAWINGS

Figure 1A is a functional block diagram of a server system, in accordance with an example embodiment.

Figure 1B is a functional block diagram of a distributed computing architecture, in accordance with an example embodiment.

Figure 1C is a functional block diagram of a computing device in accordance with an example embodiment

Figure 1D is a functional block diagram of a cloud-based server system, in accordance with an example embodiment.

Figure 1E is a schematic diagram of a computer program product, in accordance with an example embodiment.

Figure 2A is a functional block diagram of a mobile device, in accordance with an example embodiment.

Figures 2B-2D show front, side, and back views of a mobile device, in accordance with an example embodiment.

Figure 3A illustrates a scenario for using a mobile device to capture images of a target object, in accordance with an example embodiment.

Figure 3B illustrates a scenario for using a mobile device to capture images of a target object, in accordance with an example embodiment.

Figure 3C illustrates a scenario for using a mobile device to capture images of a target object, in accordance with an example embodiment.

Figure 3D illustrates a scenario for using a mobile device to capture images of a target object, in accordance with an example embodiment.

Figure 4 is a flowchart of a method, in accordance with an example embodiment.

### DETAILED DESCRIPTION

In the following detailed description, reference is made to the accompanying figures, which form a part thereof. In the figures, similar symbols typically identify similar components, unless context dictates otherwise. The illustrative embodiments described in the detailed description and figures are not meant to be limiting. Other embodiments may be utilized, and other changes may be made, without departing from the spirit or scope of the subject matter presented herein. It will be readily understood that the aspects of the present disclosure, as generally described herein, and illustrated in the figures, can be arranged, substituted, combined, separated, and designed in a wide variety of different configurations, all of which are contemplated herein.

Example embodiments disclosed herein relate to illuminating a target object with a light field generated from a multi-element display of a mobile device, capturing, with a camera, a plurality of images based on the portion of the light field reflected from the target object, and determining a 3D model of the target object based on the images.

Some methods disclosed herein may be carried out in part or in full by a mobile device with or without interaction of a user of the mobile device. Depending on the specific embodiment, the mobile device may represent a tablet computer, a laptop computer, a smartphone, wireless cellular telephone, or any other mobile computing device. Among such examples, a multi-element display of the mobile device may be used to illuminate a target object. A target object may be any object within a field of view of a camera on the mobile device. In some embodiments, the multi-element display may provide a light field that includes white light and/or colored light. Additionally or alternatively, the multi-element display may generate light from different portions of the multi-element display so as to provide lighting on the target object from various angles. Other modulations (e.g., intensity, spatial, color, polarization, etc.) of the light field generated from the multi-element display are possible.

While at least a portion of the light field may be illuminating the target object, a camera may capture images of the target object and the portion of the light field reflected from the target object. Based on the captured images, a 3D model may be determined. The 3D model may include three-dimensional shape and color information about the target object. In addition to the geometric extents and color of the target object, the three-dimensional shape and color information may include further elements such as lighting information about the target object (e.g., luminance and reflectance of the target object surfaces).

Optionally, a search query based on the 3D model may be transmitted by the mobile device. The search query may be for a specific purpose (e.g., to search for the price of the target object and locations where the target object may be purchased), or the search query may be generic (e.g., to generally provide more information about the target object). The mobile device may also optionally receive a search query result. The search query result may, for example, include a response from a server indicating further information about the target object and/or objects similar to the target object. The search query result may additionally or alternatively include a suggestion for acquiring additional images of the target object.

Portions of methods disclosed herein may be carried out in part by a server. In an example embodiment, a server may receive a search query that includes a 3D model of a target object (e.g., a search query from a mobile device). The 3D model may be based on a plurality of images of the target object and the 3D model may include three-dimensional shape and color information about the target object. The 3D model may be compared to a shape-search database in a first comparison. The server may generate a search query result based on the first comparison. The search query result may include information regarding the target object, information regarding one or more objects similar to the target object, and/or a suggestion to obtain further images of the target object. The server may transmit the search query result (e.g., to a mobile device).

Additionally or alternatively, one or more servers (e.g., in a cloud-based server) may perform some or all of the determination of the 3D model of the target object. For instance, the mobile device may capture the plurality of images of the target. The images may be transmitted to a server and the server may determine the 3D model of the target object. The 3D model may then be transmitted to, and received by, the mobile device. Other interactions between a server and the mobile device are possible within the context of the present disclosure.

A mobile device is also described herein. The mobile device may include, among other elements, a multi-element display, a camera, and a controller. The multi-element display may be a LCD display or any other multi-pixel arrayed display known in the art. The multi-element display may be configured to provide a light field that may illuminate the target object. A portion of the light field may be reflected from the target object. The camera may be configured to acquire a plurality of images of a target object based on the portion of the light field reflected from the target object. The controller may be configured to determine a 3D model of the target object based on the images. The 3D model may include three-dimensional shape and color information about the target object.

Optionally, the controller may be further configured to transmit a search query based on the 3D model and also receive a search query result. The multi-element display may also be configured to show a rendered representation of the 3D model, among other information about the 3D model.

Also disclosed herein are non-transitory computer readable media with stored instructions. The instructions may be executable by a computing device to cause the computing device to perform functions similar to those described in the aforementioned methods.

Those skilled in the art will understand that there are many different specific methods and systems that may be used in illuminating a target object with a light field generated by a multi-element display of a mobile device, capturing a plurality of images based on the portion of the light field reflected from the target object, and determining a 3D model of the target object based on the images. Each of these specific methods and systems are contemplated within the context of the present disclosure, and several example embodiments are described below.

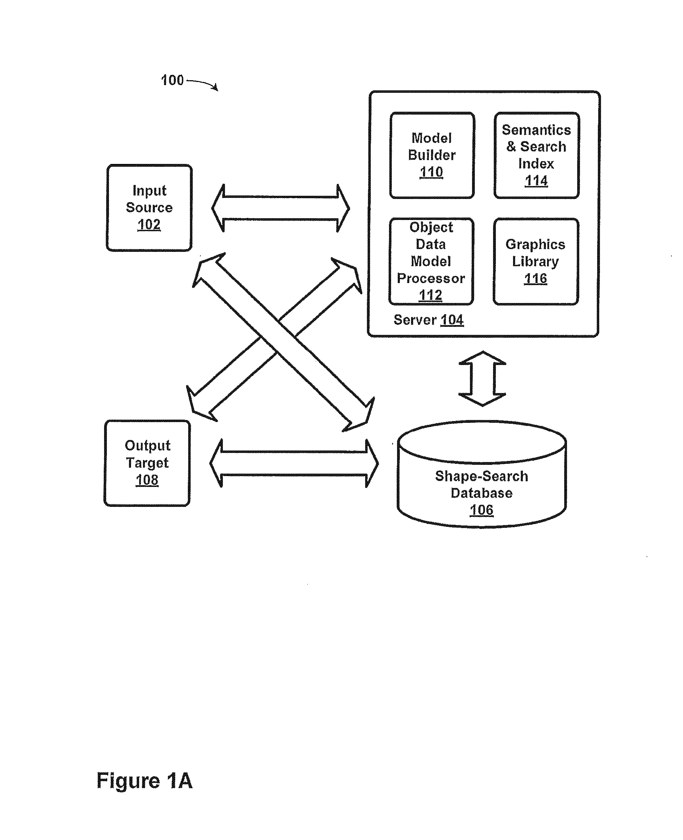

Figure 1A illustrates an example system 100 for object data modeling. The system 100 includes an input source 102 coupled to a server 104 and a database 106. The server 104 is also shown coupled to the database 106 and an output target 108. The system 100 may include more or fewer components, and each of the input source 102, the server 104, the database 106, and the output target 108 may comprise multiple elements as well, or each of the input source 102, the server 104, the database 106, and the output target 108 may be interconnected as well. Thus, one or more of the described functions of the system 100 may be divided up into additional functional or physical components, or combined into fewer functional or physical components. In some further examples, additional functional and/or physical components may be added to the examples illustrated by Figure 1A.

Components of the system 100 may be coupled to or configured to be capable of communicating via a network (not shown), such as a local area network (LAN), wide area network (WAN), wireless network (Wi-Fi), or Internet, for example. In addition, any of the components of the system 100 may be coupled to each other using wired or wireless communications. For example, communication links between the input source 102 and the server 104 may include wired connections, such as a serial or parallel bus, or wireless links, such as Bluetooth, IEEE 802.11 (IEEE 802.11 may refer to IEEE 802.11-2007, IEEE 802.11n-2009, or any other IEEE 802.11 revision), or other wireless based communication links.

The input source 102 may be a source from which a 3D model, or object data model, may be received such as a mobile device. In some examples, 3D model acquisition (shape and appearance) may be achieved by working with vendors or manufacturers to scan target objects in 3D. For instance, structured light scanners may capture images of a target object and a shape of the target object may be recovered using monochrome stereo cameras and a pattern projector. Various methods for recovering three-dimensional shape and color information from images are known in the art. For instance, Structure From Motion (SFM), stereoscopy, multiscopy, illumination with structured light, and other techniques known in the fields of computer vision and 3D imaging may be used individually or in various combinations to form a 3D model.

In other examples, the input source 102 may include a high-resolution digital single-lens reflex (DSLR) camera that may be used to capture images for color texture information. In still other examples, a raw computer-aided drafting (CAD) set of drawings may be received for each object. In yet another example, a mobile device (e.g., phone, tablet computer, laptop computer, etc.) may acquire a plurality of images of the target object and a 3D model may be determined from the images. Thus, the input source 102 may provide a 3D model, in various forms, to the server 104. As one example, multiple scans of an object may be processed into a merged mesh and assets data model, and provided to the server 104 in that form. As another example, the input source 102 may provide the 3D model within the context of a search query.

Alternatively, a mobile device may have a multi-element display that may generate light fields. A portion of the light field may be reflected from the target object. The mobile device may include a camera that may capture a plurality of images based on the portion of the light field reflected from the target object. These images from the mobile device may represent the input source from which 3D model information is determined by the system. Alternatively, the mobile device may determine the 3D model and the 3D model (among other information) may be considered an input to the described system.

The server 104 includes a model builder 110, an object data model processor 112, a semantics and search index 114, and a graphics library 116. Any of the components of the server 104 may be coupled to each other. In addition, any components of the server 104 may alternatively be a separate component coupled to the server 104. The server 104 may further include a processor and memory including instructions executable by the processor to perform functions of the components of the server 104, for example.

The model builder 110 receives the mesh data set for each object from the input source 102, which may include a data set defining a dense surface mesh geometry, and may generate an animated model of the object in 3D. For example, the model builder 110 may perform coherent texture unwrapping from the mesh surface, and determine textures of surfaces emulated from the geometry.

The object data model processor 112 may also receive the mesh data set for each object from the input source 102 and generate display meshes. For instance, the scanned mesh images may be decimated (e.g., from 5 million to 120,000 surfaces) utilizing texture-preserving decimation. Texture map generation can also be performed to determine color texture for map rendering. To generate an entire texture map, each image pixel can be associated with a predetermined texture pixel.

The semantics and search index 114 may receive captured images or processed images that have been decimated and compressed, and may perform texture resampling and also shape-based indexing. For example, for each object, the semantics and search index 114 may index or label components of the images (e.g., per pixel) as having a certain texture, color, shape, geometry, attribute, etc.

The graphics library 116 may include a WebGL or OpenGL mesh compression to reduce a mesh file size, for example. The graphics library 116 may provide the 3D object data model (or 3D model) in a form for display on a browser, for example. In some examples, a 3D object data model viewer may be used to display images of the 3D objects data models. The 3D object data model viewer may be implemented using WebGL within a web browser, or OpenGL, for example.

The shape-search database 106 may store all data sets for a 3D object data model in any number of various forms from raw data captured to processed data for display. Additionally, the shape-search database 106 may act as a shape reference library for a comparison with the 3D model. For example, upon receiving a 3D model from input source 102 in the form of a search query, the 3D model may be compared to the shape-search database 106 in order to obtain information to generate a search query result. The search query result may include information such as objects in the shape-search database 106 that are similar in any combination of shape, texture, color, size, bound volume, luminance, reflectance, and/or any other indexed object attribute.

The shape-search database 106 is communicatively-coupled to server 104, but is not required to be physically or otherwise connected to server 104. Shape-search database 106 may also be integrated into server 104. The shape-search database 106 may be used in conjunction with other elements of system 100 in order to determine if a match exists between a 3D model and objects in the shape-search database 106.

The output target 108 may include a number of different targets, such as a webpage on the Internet, a search engine, a database, etc. The output target 108 may include a 3D object data model viewer that enables product advertisements or product searches based on the 3D object data model. In examples herein, the output source 108 may further include the input source 102. For instance, a mobile device may provide a 3D model in a search query to the system 100 and be considered the input source 102. In such an instance, the system 100 may generate a search query result and transmit the search query result to the mobile device. Thus, the mobile device may also be considered the output target 108. Other output targets 108 are possible. For instance, search query results may be transmitted from the system 100 to different mobile devices.

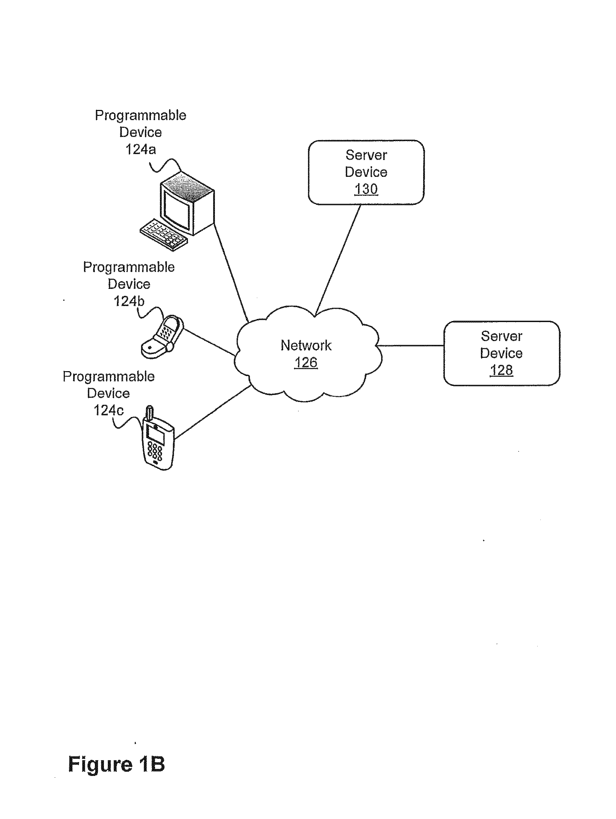

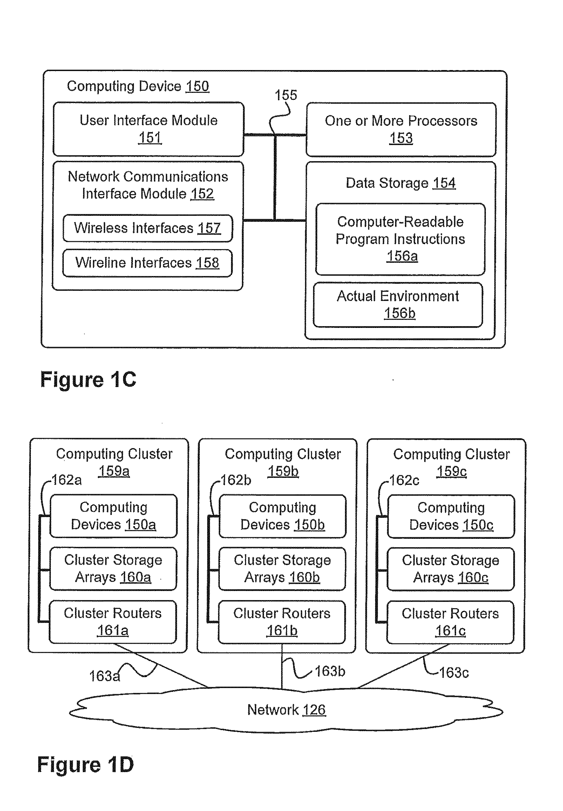

Figures 1B, 1C, and 1D illustrate examples of a computing device used in a system that is arranged in accordance with at least some embodiments described herein. Depending upon the particular embodiment, the computing device may be a personal computer, mobile device, cellular phone, wearable computer, tablet computer, or a server. The computing device may be used to implement systems and method for illuminating a target object with a light field, obtaining a plurality of images based on the portion of the light field reflected from the target object, and generating a 3D model of the target object based on the images. Methods may optionally include transmitting/receiving a search query that includes the 3D model, comparing the 3D model to a shape-search database, generating a search query result based on the comparison, and transmitting/receiving the search query result as described above and as illustrated in Figure 1A, and elsewhere within the present disclosure.

Figure 1B shows server devices 128, 130 configured to communicate, via network 126, with programmable devices 124a, 124b, and 124c. Network 126 may correspond to a LAN, a wide area network (WAN), a corporate intranet, the public Internet, or any other type of network configured to provide a communications path between networked computing devices. The network 126 may also correspond to a combination of one or more LANs, WANs, corporate intranets, and/or the public Internet.

Although Figure 1B only shows three programmable devices, distributed application architectures may serve tens, hundreds, thousands, or even more programmable devices. Moreover, programmable devices 124a, 124b, and 124c (or any additional programmable devices) may be any sort of computing device, such as a laptop computer, tablet computer, desktop computer, network terminal, wireless communication device (e.g., a cell phone or smart phone), and so on. In some embodiments, programmable devices 124a, 124b, and 124c may be dedicated to the design and use of software applications. In other embodiments, programmable devices 124a, 124b, and 124c may be general purpose computers that are configured to perform a number of tasks and need not be dedicated to software development tools.

Server devices 128, 130 can be configured to perform one or more services, as requested by programmable devices 124a, 124b, and/or 124c. For example, server device 128 and/or 130 can provide content to programmable devices 124a-124c. The content can include, but is not limited to, web pages, hypertext, scripts, binary data such as compiled software, images, audio, and/or video. The content can include compressed and/or uncompressed content. The content can be encrypted and/or unencrypted. Other types of content are possible as well.

As another example, server device 128 and/or 130 can provide programmable devices 124a-124c with access to software for database, search, computation, graphical, audio, video, World Wide Web/Internet utilization, and/or other functions. Many other examples of server devices are possible as well.

Figure 1C is a block diagram of a computing device (e.g., system) in accordance with an example embodiment. In particular, computing device 150 shown in Figure 1C can be configured to perform one or more functions of server devices 128, 130, network 126, and/or one or more of programmable devices 124a, 124b, and 124c. Computing device 150 may include a user interface module 151, a network-communication interface module 152, one or more processors 153, and data storage 154, all of which may be linked together via a system bus, network, or other connection mechanism 155.

User interface module 151 can be operable to send data to and/or receive data from external user input/output devices. For example, user interface module 151 can be configured to send and/or receive data to and/or from user input devices such as a keyboard, a keypad, a touch screen, a computer mouse, a track ball, a joystick, a camera, a voice recognition module, and/or other similar devices. User interface module 151 can also be configured to provide output to user display devices, such as one or more cathode ray tubes (CRT), liquid crystal displays (LCD), light emitting diodes (LEDs), displays using digital light processing (DLP) technology, printers, light bulbs, and/or other similar devices, either now known or later developed. User interface module 151 can also be configured to generate audible output(s), such as a speaker, speaker jack, audio output port, audio output device, earphones, and/or other similar devices.

Network-communications interface module 152 can include one or more wireless interfaces 157 and/or one or more wireline interfaces 158 that are configurable to communicate via a network, such as network 126 shown in Figure 1B. Wireless interfaces 157 can include one or more wireless transmitters, receivers, and/or transceivers, such as a Bluetooth transceiver, a Zigbee transceiver, a Wi-Fi transceiver, a WiMAX transceiver, and/or other similar type of wireless transceiver configurable to communicate via a wireless network. Wireline interfaces 158 can include one or more wireline transmitters, receivers, and/or transceivers, such as an Ethernet transceiver, a Universal Serial Bus (USB) transceiver, or similar transceiver configurable to communicate via a twisted pair wire, a coaxial cable, a fiber-optic link, or a similar physical connection to a wireline network.

In some embodiments, network communications interface module 152 can be configured to provide reliable, secured, and/or authenticated communications. For each communication described herein, information for ensuring reliable communications (i.e., guaranteed message delivery) can be provided, perhaps as part of a message header and/or footer (e.g., packet/message sequencing information, encapsulation header(s) and/or footer(s), size/time information, and transmission verification information such as CRC and/or parity check values). Communications can be made secure (e.g., be encoded or encrypted) and/or decrypted/decoded using one or more cryptographic protocols and/or algorithms, such as, but not limited to, DES, AES, RSA, Diffie-Hellman, and/or DSA. Other cryptographic protocols and/or algorithms can be used as well or in addition to those listed herein to secure (and then decrypt/decode) communications.

Processors 153 can include one or more general purpose processors and/or one or more special purpose processors (e.g., digital signal processors, application specific integrated circuits, etc.). Processors 153 can be configured to execute computer-readable program instructions 156a that are contained in the data storage 154 and/or other instructions as described herein.

Data storage 154 can include one or more computer-readable storage media that can be read and/or accessed by at least one of processors 153. The one or more computer-readable storage media can include volatile and/or non-volatile storage components, such as optical, magnetic, organic or other memory or disc storage, which can be integrated in whole or in part with at least one of processors 153. In some embodiments, data storage 154 can be implemented using a single physical device (e.g., one optical, magnetic, organic or other memory or disc storage unit), while in other embodiments, data storage 154 can be implemented using two or more physical devices.

Data storage 154 can include computer-readable program instructions 156a, actual environment 156b, and perhaps additional data. Actual environment 156b can store at least some of the data used by one or more processes and/or threads of a software application. In some embodiments, data storage 154 can additionally include storage required to perform at least part of the herein-described methods and techniques and/or at least part of the functionality of the herein-described devices and networks.

Figure 1D depicts a network 126 of computing clusters 159a, 159b, 159c arranged as a cloud-based server system in accordance with an example embodiment. Server devices 128 and/or 130 can be cloud-based devices that store program logic and/or data of cloud-based applications and/or services. In some embodiments, server devices 128 and/or 130 can be a single computing device residing in a single computing center. In other embodiments, server device 128 and/or 130 can include multiple computing devices in a single computing center, or even multiple computing devices located in multiple computing centers located in diverse geographic locations. For example, Figure 1B depicts each of server devices 128 and 130 residing in different physical locations.

In some embodiments, data and services at server devices 128 and/or 130 can be encoded as computer readable information stored in tangible computer readable media (or computer readable storage media) and accessible by programmable devices 124a, 124b, and 124c, and/or other computing devices. In some embodiments, data at server device 128 and/or 130 can be stored on a single disk drive or other tangible storage media, or can be implemented on multiple disk drives or other tangible storage media located at one or more diverse geographic locations.

Figure 1D depicts a cloud-based server system in accordance with an example embodiment. In Figure 1D, the functions of server device 128 and/or 130 can be distributed among three computing clusters 159a, 159b, and 158c. Computing cluster 159a can include one or more computing devices 150a, cluster storage arrays 160a, and cluster routers 161a connected by a local cluster network 162a. Similarly, computing cluster 159b can include one or more computing devices 150b, cluster storage arrays 160b, and cluster routers 161b connected by a local cluster network 162b. Likewise, computing cluster 159c can include one or more computing devices 150c, cluster storage arrays 160c, and cluster routers 161c connected by a local cluster network 162c.

In some embodiments, each of the computing clusters 159a, 159b, and 159c can have an equal number of computing devices, an equal number of cluster storage arrays, and an equal number of cluster routers. In other embodiments, however, each computing cluster can have different numbers of computing devices, different numbers of cluster storage arrays, and different numbers of cluster routers. The number of computing devices, cluster storage arrays, and cluster routers in each computing cluster can depend on the computing task or tasks assigned to each computing cluster.

In computing cluster 159a, for example, computing devices 150a can be configured to perform various computing tasks of server 130. In one embodiment, the various functionalities of server 130 can be distributed among one or more of computing devices 150a, 150b, and 150c. Computing devices 150b and 150c in computing clusters 159b and 159c can be configured similarly to computing devices 150a in computing cluster 159a. On the other hand, in some embodiments, computing devices 150a, 150b, and 150c can be configured to perform different functions.

In some embodiments, computing tasks and stored data associated with server devices 128 and/or 130 can be distributed across computing devices 150a, 150b, and 150c based at least in part on the processing requirements of server devices 128 and/or 130, the processing capabilities of computing devices 150a, 150b, and 150c, the latency of the network links between the computing devices in each computing cluster and between the computing clusters themselves, and/or other factors that can contribute to the cost, speed, fault-tolerance, resiliency, efficiency, and/or other design goals of the overall system architecture.

The cluster storage arrays 160a, 160b, and 160c of the computing clusters 159a, 159b, and 159c can be data storage arrays that include disk array controllers configured to manage read and write access to groups of hard disk drives. The disk array controllers, alone or in conjunction with their respective computing devices, can also be configured to manage backup or redundant copies of the data stored in the cluster storage arrays to protect against disk drive or other cluster storage array failures and/or network failures that prevent one or more computing devices from accessing one or more cluster storage arrays.

Similar to the manner in which the functions of server devices 128 and/or 130 can be distributed across computing devices 150a, 150b, and 150c of computing clusters 159a, 159b, and 159c, various active portions and/or backup portions of these components can be distributed across cluster storage arrays 160a, 160b, and 160c. For example, some cluster storage arrays can be configured to store the data of server device 128, while other cluster storage arrays can store data of server device 130. Additionally, some cluster storage arrays can be configured to store backup versions of data stored in other cluster storage arrays.

The cluster routers 161a, 161b, and 161c in computing clusters 159a, 159b, and 159c can include networking equipment configured to provide internal and external communications for the computing clusters. For example, the cluster routers 161a in computing cluster 159a can include one or more internet switching and routing devices configured to provide (i) local area network communications between the computing devices 150a and the cluster storage arrays 160a via the local cluster network 162a, and (ii) wide area network communications between the computing cluster 159a and the computing clusters 159b and 159c via the wide area network connection 163a to network 126. Cluster routers 161b and 161c can include network equipment similar to the cluster routers 161a, and cluster routers 161b and 161c can perform similar networking functions for computing clusters 159b and 159b that cluster routers 161a perform for computing cluster 159a.

In some embodiments, the configuration of the cluster routers 161a, 161b, and 161c can be based at least in part on the data communication requirements of the computing devices and cluster storage arrays, the data communications capabilities of the network equipment in the cluster routers 161a, 161b, and 161c, the latency and throughput of local networks 162a, 162b, 162c, the latency, throughput, and cost of wide area network links 163a, 163b, and 163c, and/or other factors that can contribute to the cost, speed, fault-tolerance, resiliency, efficiency and/or other design goals of the moderation system architecture.

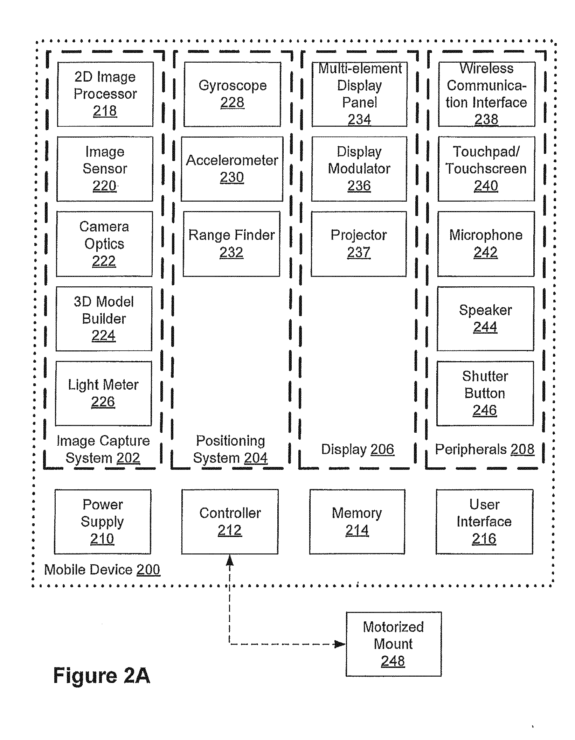

Figure 2A illustrates a functional block diagram of a mobile device 200 that is configured to illuminate a target object with a light field from a multi-element display, capture a plurality of images based on the portion of the light field reflected from the multi-element display, and determine a 3D model of the target object from the images as described in the present disclosure.

In an example embodiment, mobile device 200 may include subsystems such as an image capture system 202, a positioning system 204, display 206, and peripherals 208, as well as a power supply 210, a controller 212, a memory 214, and a user interface 216.

The image capture system 202 may include components such as a 2-D image processor 218, an image sensor 220, camera optics 222, a 3D model builder 224, and a light meter 226. The positioning system 204 may include components such as a gyroscope 228, an accelerometer 230, and a range finder 232. The display 206 may include a multi-element display panel 234 and a display modulator 236 and the peripherals 208 may include a wireless communication interface 238, a touchpad/touchscreen 240, a microphone 242, a speaker 244, and a shutter button 246.

The multi-element display may include an LCD display or any other multi-pixel arrayed display that may be configured to provide a light field or multiple distinct light fields, in some examples. The multi-element display may include a plurality of light-emitting diodes (LEDs), and each LED or groups of LEDs may be separately controlled. In other examples, the display 206 may include two or more display panels and each may be separately controlled. In further examples, various elements of the multi-element display panel 234 may include pixels, LEDs, panels, or portions of the display 206 may be considered elements of the display 206. In some examples herein, elements of the multi-element display panel 234 may operate or be controlled independent of other elements of the multi-element display panel 234.

Mobile device 200 may represent a still camera, a video camera, a cell phone, a web cam, a tablet device, or any other image capture device known in the art. Further, mobile device 200 may be part of a wearable computing system and/or integrated into any number of computing devices known in the art.

Mobile device 200 may be used in 3D machine vision. For example, various embodiments of mobile device 200 may be implemented with a robotic control system (e.g., an automated scanning system) to illuminate a target object with light field of a multi-element display, capture images based on the portion of the light field reflected from the target object, and determine a 3D model of the target object based on the images.

The power supply 210 may provide power to various components of mobile device 200 and may represent, for example, a rechargeable lithium-ion battery. Other power supply materials and types known in the art are possible.

Many or all of the functions of mobile device 200 may be controlled by controller 212. Controller 212 may include one or more processors (such as microprocessors) that execute instructions stored in a non-transitory computer readable medium, such as the memory 214. Controller 212 may control the user interface 216 to display 3D models on the multi-element display panel 234. Additionally, the controller 212 may control the display modulator 236 to generate light fields for the illumination of a target object. The controller 212 may also control the image capture system 202 and various other components of mobile device 200. The controller 212 may also represent a plurality of computing devices that may serve to control individual components or subsystems of the mobile device 200 in a distributed fashion.

In addition to instructions, the memory 214 may store data such as previously captured 2D images and 3D models. Thus, the memory 214 may serve as a data store of information related to 3D object models. Such information may be used by mobile device 200 and controller 212 at various points during the target object illumination, image capture and 3D model building process.

The mobile device 200 may include a user interface 216 for providing information to or receiving input from a user of mobile device 200. The user interface 216 may control or enable control of content and/or the layout of interactive images that may be displayed on the multi-element display panel 234. Further, the user interface 216 may include one or more input/output devices within the set of peripherals 208, such as touchpad/touchscreen 240, microphone 242, and speaker 244. The controller 212 may control the function of the mobile device 200 based on inputs received through the user interface 216. For example, the controller 212 may utilize user input from the touchpad/touchscreen 240 to control when the image capture system 202 should begin illuminating a target object with light fields from the multi-element display panel 234 and capture a plurality of images based on the portion of the light field reflected from the target object.

The image capture system 202 may include several components similar to those that may be found in a digital camera. Specifically, the image capture system 202 may include various camera optics 222 configured to provide a field of view to the image sensor 220. The image capture system 202 may also include various other processors configured at least to manipulate image data to create a plurality of 2D image files and also form 3D models from the 2D image files. These processors may include the 2D image processor 218 and the 3D model builder 224. The image capture system 202 may further include the light meter 226. In some embodiments, the light meter 226 may be configured to provide to controller 212 light measurements based on the portion of the light field reflected from the target object. The light measurements may be used to set exposure parameters that may include ISO, shutter speed and aperture settings for use when capturing the plurality of images of the target object. Further, the user interface 216 may act responsively to the light measurements. For example, the user interface 216 may request, provide instructions for, or otherwise alert the user to hold the mobile device 200 steady during image capture if the light level is determined to be below a predetermined threshold. Alternatively, the user interface 216 may request the user to move the mobile device 200 so as to illuminate the target object more fully and/or from a different position.

The positioning system 204 may be configured to provide data related to the current position and the current orientation of the mobile device 200 to the controller 212.

The gyroscope 228 may be a microelectromechanical system (MEMS) gyroscope, a fiber optic gyroscope, or another type of gyroscope known in the art. The gyroscope 228 may be configured to provide orientation information to the controller 212. The positioning system 204 may further include an accelerometer 230 configured to provide motion input data to the controller 212. The accelerometer 230 may be one or any combination of known accelerometer types known in the art such as piezoelectric, optical, resistive, capacitive, shear mode, strain gauge, surface acoustic wave, laser, MEMS, etc.

A range finder 232 may be included in the positioning system 204. In some example embodiments, the range finder 232 may be used to determine the distance to a target object. In such embodiments, the distance information may be used to determine proper focus for the camera optics 222. For instance, the range finder 232 may generate a rough depth map of a scene using, for instance, an ultrasonic or infrared illuminator and detector. The rough depth map may be used in conjunction with the plurality of acquired images to determine the 3D model of the target object. The range finder 232 may include any known means for range-finding, such as LIDAR, RADAR, a microwave rangefinder, etc.

The display 206 may include a multi-element display panel 234 and a display modulator 236. The multi-element display panel 234 may be a LCD display, a LED display or any other areal display known in the art. The display modulator 236 may be configured to modulate the multi-element display so as to illuminate the target object with various light fields that may aid in the determination of a 3D model of the target object. For instance, the light fields may include polarized light, structured light, colored light, and light generated from different portions of the multi-element display panel 234. Other types of light fields are possible. The display 206 may be configured to provide a variety of graphics to a user of mobile device 200. For instance, the display 206 may function as a part of user interface 216 to display images, text, menus, and instructions to the user.

The display 206 may alternatively or additionally include a projector 237 that may be used for projecting a light field onto the target object. Similar to the multi-element display panel 234, the projector 237 may be controlled to provide a number of different light fields that may include dot and line patterns, airy patterns, spectrally-varying patterns, etc. In some embodiments, a projector may focus light onto the target object such that the target object is lit with more photons than a multi-element display panel.

In some embodiments, the display 206 may be configured to provide a majority of photons incident on the target object compared to ambient light sources. In other words, the display 206 of mobile device 200 may be the dominant light source to provide illumination for the target object.

The display 206 may also include light modifiers that may be fixedly attached or coupled to the mobile device 200, in either a temporary or permanent fashion, in order to modify the light generated by display 206 (either a multi-element display panel 234 or a projector). Light modifiers may include, but are not limited to, any combination of a grid, a grating, and/or a diffractive optical element. Other light modifiers known in the art to provide a characteristic structure to light fields (e.g., dot arrays, line arrays, airy patterns, etc.) are possible.

The mobile device 200 may include a set of peripherals 208 that may be configured to provide input and output to and from a user of mobile device 200 or elsewhere. In one example, the mobile device 200 may include a wireless communication interface 238 for wirelessly communicating with one or more devices directly or via a communication network. For example, wireless communication interface 238 mayuse 3G cellular communication, such as CDMA, EVDO, GSM/GPRS, or 4G cellular communication, such as WiMAX or LTE. Alternatively, wireless communication interface 238 may communicate with a wireless local area network (WLAN), for example, using WiFi. In some embodiments, wireless communication interface 238 may communicate directly with a device, for example, using an infrared link, Bluetooth, or ZigBee.

The shutter button 246 may be used by a user of the mobile device 200 to capture an image of the target object and/or to trigger the methods described herein. The shutter button 246 may be depressed by mechanical means. In some embodiments, the mobile device 200 may not have a shutter button 246. For instance, the capture of images may be fully automated or initiated in another way, for example in response to a voice command via the microphone 242, a touch input using the touchpad/touchscreen 240, or a remote device communicating with the mobile device 200 via the wireless communication interface 238.

The components of the mobile device 200 may be configured to work in an interconnected fashion with other components within or outside their respective systems. For instance, in an example embodiment, a user of the mobile device 200 may press the shutter button 246 while the mobile device 200 is in a 3D object modeling mode. In response to the user input, the range finder 232 may determine the range to a relevant target object within the field of view of the camera optics 222. The camera optics 222 may autofocus on the target object. The multi-element display panel 234 may be controlled by the display modulator 236 to illuminate the target object with a light field. The light meter 225 may be controlled by the controller 212 to set the correct exposure based at least the portion of the light field reflected from the target object and various characteristics of the camera optics 222 and the image sensor 220, such as aperture and ISO settings. In response to setting the correct exposure, the image sensor 220 may be controlled by the controller 212 to capture a plurality of images of the target object. The raw data from the image sensor 220 may be transmitted to the 2D image processor 218 in order to convert the raw image file to a compressed image format, such as the Joint Photographic Experts Group (JPEG) standard file format. The images may be transmitted to the 3D model builder 224 in order to determine a 3D model of the target object.

Although Figure 2A shows various components of mobile device 200, i.e., wireless communication interface 238, controller 212, memory 214, image sensor 220, multi-element display panel 234, and user interface 216, as being integrated into the mobile device 200, one or more of these components may be mounted or associated separately from the mobile device 200. For example, image sensor 220 may be mounted separately from the mobile device 200. Thus, the mobile device 200 may be provided in the form of device elements that may be located separately or together. The device elements that make up mobile device 200 may be communicatively coupled together in either a wired or wireless fashion.

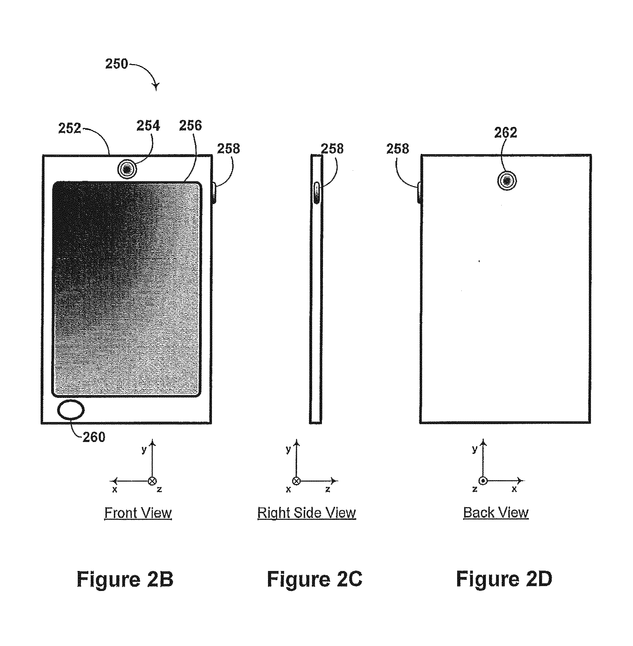

Figures 2B-2D illustrate a mobile device 250 including various elements, such as a body 252, a front-facing camera 254, a multi-element display 256, a shutter button 258, and other buttons 260. Mobile device 250 may further include a rear-facing camera 262. The front-facing camera 254 is positioned on a side of the mobile device 250 typically facing a user while in operation, or on a side of the device with the multi-element display. The rear-facing camera 262 is positioned on a side of the mobile device 250 opposite the front-facing camera 254. Of course, referring to the cameras as front and rear facing is arbitrary, and the mobile device 252 may include multiple cameras positioned on various sides of the mobile device 252. The elements of mobile device 250 may include some or all of the elements described for Figure 2A. Although mobile device 250 is depicted as a tablet computer, other embodiments are possible. For instance, the mobile device 250 may be a smartphone, wearable computer, or a laptop computer, among other examples.

The multi-element display 256 may represent an LED display, a LCD display, a plasma display, or any other areal light-emitting display known in the art. The multi-element display 256 may be configured to provide a light field to illuminate a target object. The multi-element display 256 may provide flash or constant illumination of the scene. The multi-element display 256 may also be configured to provide a light field that includes one or more of structured light, polarized light, light with specific spectral content, and/or light from specific portions of the multi-element display 256. Other types of light fields known and used to recover 3D models from an object are possible within the context of the disclosure.

The front-facing camera 254 may include an image sensor and associated optical elements such as lenses. The front-facing camera 254 may offer zoom capabilities or may have a fixed focal length lens. In other embodiments, interchangeable lenses may be used with the front-facing camera 254.

The front-facing camera 254 may have a variable mechanical aperture and a mechanical shutter. The front-facing camera 254 may alternatively include an electronic shutter. The front-facing camera 254 may be configured to capture still images, video images, or both. Further, front-facing camera 254 may represent a monoscopic, stereoscopic, or multiscopic camera.

The mobile device 250 may be configured to use the multi-element display 256 and the front-facing camera 254 to capture images of a target object. The images may be a plurality of still images or a video stream. The image capture may be triggered by pressing the shutter button 258, pressing a softkey, or by some other triggering means. Depending upon the exact embodiment, the images may be captured automatically at a specific time interval, upon pressing shutter button 258, upon appropriate lighting conditions of the target object, upon moving the mobile device 250 a predetermined distance, or according to a different predetermined capture schedule.

A controller, such as the controller 212 of Figure 2A, may be used to determine a 3D model of the target object based on the plurality of captured images. The 3D model may include three-dimensional shape and color information about the target object. The 3D model may also include other forms of information regarding the target object, including reflectance and luminance information about the target object. The 3D model may include a point cloud model and/or a wireframe model of the target object. The 3D model may be determined using several methods known in the art of computer vision and 3D imaging, including structure from motion (SFM) and stereoscopy/multiscopy techniques.

The controller of mobile device 250 may be optionally configured to transmit a search query that includes the 3D model. The search query may be a request for further general information about the target object. Alternatively, the search query may be a specific request for information about the target object such as the part and model numbers of the target object. Specific requests for other types of information regarding the target object are possible. The search query may be transmitted via any type of wired or wireless communication interface (e.g., such as wireless communication interface 238) or any other means for data transfer.

The controller of mobile device 250 may additionally be optionally configured to receive a search query request. The search query request may be received via any type of wired or wireless communications link or another means for data transfer. The search query request may include, for instance, information regarding the target object, information regarding objects similar to the target object, and/or a suggestion to acquire additional images of the target object.

In some embodiments, the mobile device 250 may be configured to fixedly attach to, or couple to, a motorized mount (e.g., such as a motorized mount 248 illustrated in Figure 2A). Such a motorized mount may be used, for instance, to move the mobile device between a predetermined set of different fields of view, perspectives, and/or positions with respect to the target object. The motorized mount 248 may be controlled by the controller 212 in order to determine the 3D model of the target object based on a plurality of images captured at least in part while the motorized mount moves between the predetermined set of fields of view, perspectives, and/or positions with respect to the target object.

The multi-element display 256 may be configured to show a rendered representation of the 3D model. The rendered representation may be shown on the multi-element display 256 during and/or after image capture of the target object. The rendered representation may be generated by the mobile device 250 using known 3D rendering techniques and the 3D model of the target object. The multi-element display 256 may be configured to show rendered representations that include monoscopic, stereoscopic, or multiscopic images of the target object.

The multi-element display 256 may also be configured to show messages based on the search query result. For instance, if the search query result included a suggestion to acquire additional images of the right side of the target object, the multi-element display 256 may show, "Move the mobile device around the target object to the right." Additionally or alternatively, an arrow may be shown on the multi-element display 256 to direct the user of the mobile device to move it in a specific direction with respect to the target obj ect.

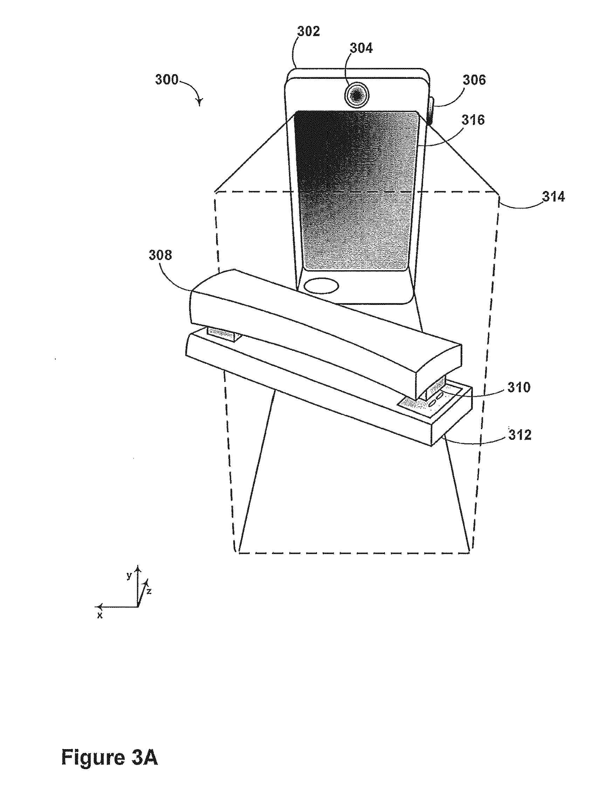

Figure 3A illustrates a scenario 300 for using a mobile device to capture images of a target object. Figure 3A includes a mobile device 302 that may be similar to the mobile device 200 from Figure 2A. Mobile device 302 may include a camera 304 with a field of view. The mobile device 302 may be in the local environment of a stapler 308, which may be considered a target object. In some embodiments, a shutter button 306 may be used to trigger the illumination and image capture process. A multi-element display 316 may be used to illuminate the target object with a light field 314. The light field may include a specific light pattern (e.g., polarized light using polarized filters, light with a predetermined spectral content, light originating from different locations on the multi-element display 316, etc.) as described above. The light field may alternatively include as elements one or more an array of dots, an array of stripes, a grid pattern, a concentric circle pattern, an airy disk, and/or an interference pattern.

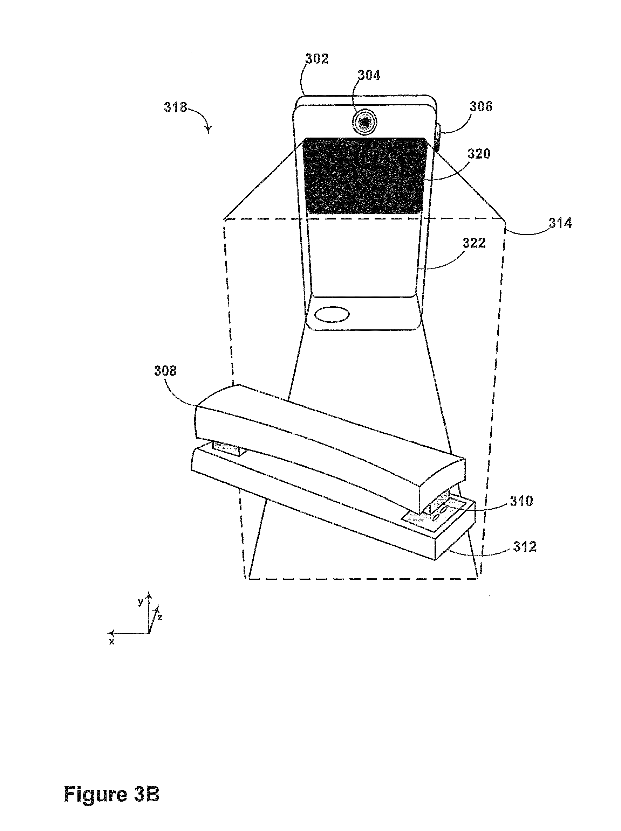

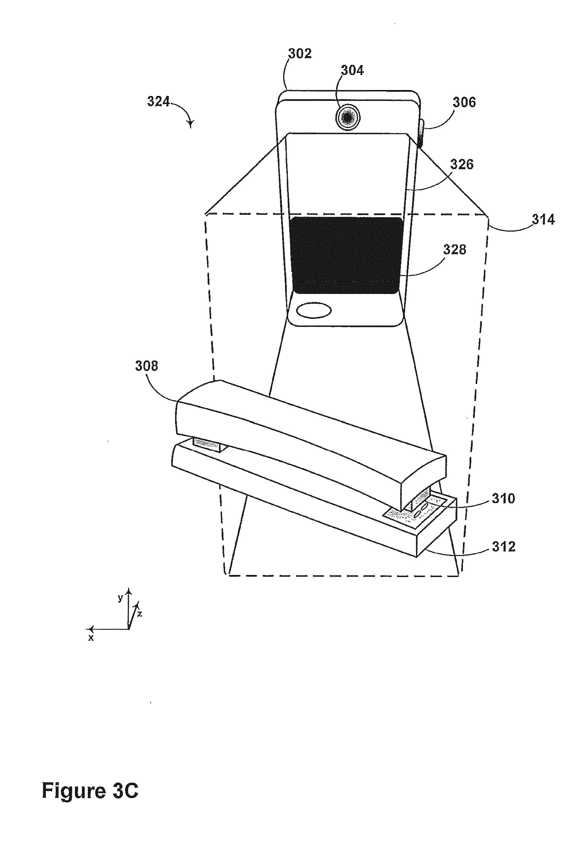

In one example scenario 318 illustrated in Figure 3B, a bottom portion 322 of the multi-element display is lit while a top portion 320 is unlit. This may be considered a first light field. Figure 3C illustrates a scenario 324 wherein the top portion 326 of the multi-element display is lit while the bottom portion 328 is unlit. This may be considered a second light field. If respective images of the stapler 308 are captured while the stapler 308 is illuminated by the first light field and the second light field, further shape, color, and texture (among other attributes) information may be determined from the images. For instance, stapler cartridge 310 may be made of a highly reflective metal material, such as stainless steel. An image of the stapler 308 illuminated with a first light field may include a specular reflection of a first position on the stapler cartridge 310. An image of the stapler 308 under the illumination with the second light field may include a specular reflection with a second position on the stapler cartridge 310. The difference between the first and second locations of the respective specular reflections (as well as other aspects of the plurality of images) may provide information about the shape and material of the stapler 308. Thus, by capturing a plurality images under various modulated light fields, a 3D model may be determined. Further, specular reflections and other known light/matter interactions (e.g., photoluminescence, absorbance, and/or other spectroscopic signatures specific to a material) may be used to determine a material of the target object.

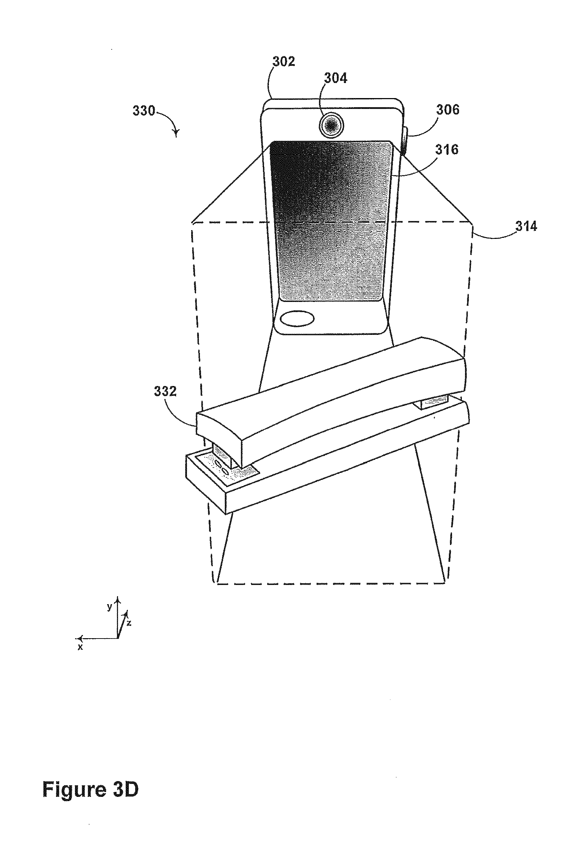

Depending on the embodiment, the intensity of the light field may be such that the majority of light incident on the object originates from the multi-element display 316. In other words, the multi-element display 316 may serve as the dominant light source compared to other sources such as ambient light. A front-facing camera 304 may be used to capture a plurality of images of the stapler 308. The captured images may be based on the portion of the light field generated by the multi-element display 316 that is reflected from the stapler 308. Images may be captured from one or more different viewing perspectives (such as that shown in Figure 3D) in order to obtain a more complete data set about the target object.

A controller of the mobile device 302 may be configured to determine a 3D model of the stapler 308 based on the acquired images and the light field. The 3D model may be determined using various methods known in the art such as Structure From Motion (SFM) as well as other 2D-to-3D conversion and 3D model building techniques. The 3D model may include a point cloud or a collection of polygons that make up a shape. Other information may be included in the 3D model include texture, color, reflectance, and other information related to various regions of the 3D model.

The controller may be optionally configured to transmit a search query that includes the 3D model. Further, the controller may be optionally configured to receive a search query result.

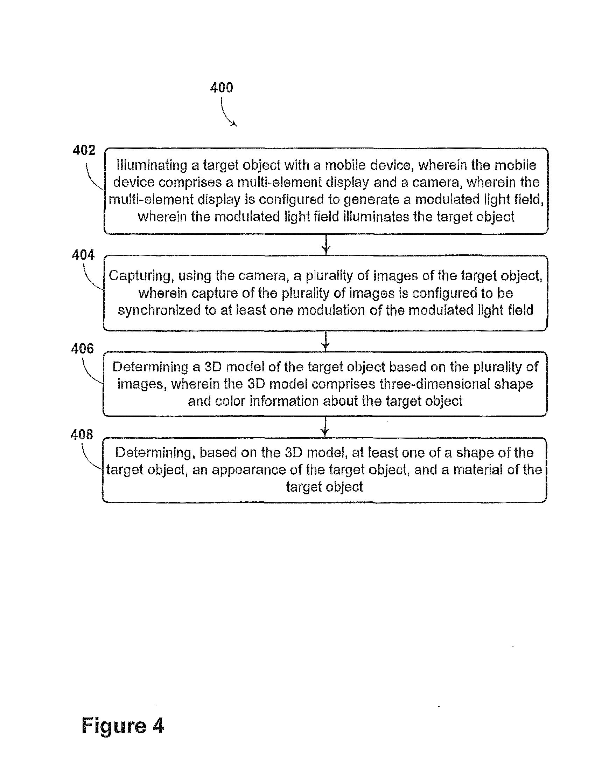

A method 400 is provided for using a mobile device to illuminate a target object with a light field generated from a multi-element display, capture a plurality of images of the target object, determining a 3D model from the images, and determining at least one aspect of the target object include shape, appearance, and material. The method may be performed using any of the apparatus shown in Figures 2-3 and described above, however, other configurations may be used. Figure 4 illustrates the steps in an example method, however, it is understood that in other embodiments, the steps may appear in different order and steps may be added or subtracted.

In addition, method 400 may include one or more operations, functions, or actions as illustrated by one or more of blocks 402-408. Although the blocks are illustrated in a sequential order, these blocks may also be performed in parallel, and/or in a different order than those described herein. Also, the various blocks may be combined into fewer blocks, divided into additional blocks, and/or removed based upon the desired implementation. Further, for the method 400 and other processes and methods disclosed herein, each block may represent a module, a segment, or a portion of program code, which includes one or more instructions executable by a processor or computing device for implementing specific logical functions or steps in the process. The program code may be stored on any type of computer readable medium, for example, such as a storage device including a disk or hard drive. The computer readable medium may include non-transitory computer readable medium, for example, such as computer-readable media that stores data for short periods of time like register memory, processor cache and Random Access Memory (RAM). The computer readable medium may also include non-transitory media, such as secondary or persistent long term storage, like read only memory (ROM), optical or magnetic disks, compact-disc read only memory (CD-ROM), for example.

Step 402 includes illuminating a target object with a mobile device. The mobile device includes a multi-element display and a camera. The multi-element display is configured to generate a modulated light field that illuminates the target object. In reference to Figure 2A, the target object may be any object within the field of view of the image capture system 202 of the mobile device 200. Step 402 may be triggered by a user interaction with the user interface 216 of the mobile device 200 or by pressing shutter button 246. Alternatively, the step 402 may be triggered automatically or by some other means.

Step 402 may also be illustrated as shown in Figure 3A. In an example embodiment, a mobile device 302 with a front-facing camera 304 may illuminate a stapler 308 with a light field 314 generated by a multi-element display 316. The stapler 308 may be termed the target object.

Step 404 includes capturing, using a camera (such as front-facing camera 304), a plurality of images of the target object. In response to a user selecting a 3D model mode or another trigger, such as shutter button 306 or a softkey, the mobile device 302 may begin acquiring images of the target object. The image acquisition may be carried out based on a specific schedule, a specific time interval, a specific position/orientation of the camera, among other triggers.

The plurality of images may be captured using a monocular, stereoscopic, or multiscopic camera. Further, image capture may be carried out fully or in part by at least one active range sensor. The multi-element display of the mobile device may illuminate the target object with a light field, and the plurality of images may be based on the portion of the generated light field reflected from the target object. The multi-element display may be a visible LED or LCD display, for example. Other embodiments may include any other known type of areal light display.

The multi-element display may provide illumination for the target object that includes light fields with one or more specific spatial patterns, light with one or more specific spectral contents, and other forms of structured and/or modulated light. The spatial light patterns may be used to recover three-dimensional information about the target object in order to determine a 3D model of the target object. Further, other information, such as shape, appearance, reflectance, absorption, material composition, etc. may be recovered by information in the plurality of images captured while illuminating the target object with such light fields.

The image capture may be synchronized to one or more modulations of the light field. For instance, as shown Figure 3B, a first scenario 318 may include a top portion 320 of a multi-element display being unlit and a bottom portion 322 of the multi-element display being lit. This 'half-on, half-off' lighting pattern generated by the multi-element display may be considered a first light field that illuminates the target object. An image may be captured of the target object (in this case, a stapler 308) based on the portion of the first light field reflected from the target object.

One or more different images may be captured during a second scenario 324 illustrated by Figure 3C. In such a scenario, the top portion 326 of the multi-element display may be lit and the bottom portion 328 of the multi-element display may be unlit. The images captured during the second scenario 324 are based on the portion of the second light field reflected from the stapler 308.

Step 406 includes receiving or determining a 3D model of the target object based on the plurality of images. The 3D model may include three-dimensional shape and color information about the target object. Further, the 3D model may include information about the luminance and reflectivity and general lighting information about the target object. Other information about the target object may also be included in the 3D model. Step 406 may be carried out continuously as the mobile device 200 is capturing the plurality of images of the target object. For instance, the mobile device 200 may be adding point cloud and color information to the 3D model while new images are being captured of the target image.

Step 406 may be performed by the mobile device processing the image data so as to generate a 3D model, or by the mobile device providing the image data to a server, and receiving from the server the 3D model or a combination of such functions.

Step 408 includes determining, based on the 3D model, at least one of a shape of the target object, an appearance of the target object, and a material of the target object. In other words, based on the determined 3D model, additional information may be determined about the target object. For instance, using the above example, the additional information may be determined based on a comparison between images captured of the stapler 308 when illuminated by the first light field and the second light field of scenarios 318 and 324, respectively.

Other information may be determined based on the plurality of images. For example, a texture of the 3D model may be determined based on the plurality of images. In the above example, differences between images captured with light fields originating from different spatial locations (Figures 3B and 3C) may suggest a specific texture of the 3D model. In another example, specular reflections (e.g., from the metal staple cartridge) detected from the a region of the captured images may indicate a smooth texture in the corresponding region of the 3D model.

One example of the method may include using the mobile device to capture a plurality of images of a room and the contents of the room. For instance, a user may trigger a 3D modelling mode, which may initiate the capture of the plurality of images. The user may then move the mobile device so as to capture images from a large number of viewing angles. Further, specific objects in the room may be scanned. In this manner, a 3D model of the room and its contents may be determined. Those skilled in the art will recognize that there are a wide variety of other example scenarios in which the method may be employed. Each of the other scenarios are contemplated herein.

The method may include optional steps, such as transmitting a search query from the mobile device based at least in part on the 3D model. The search query may include just the 3D model. Alternatively, the search query may include other search criteria. For instance, a user may request pricing information regarding a target object. Accordingly, the search query may include the 3D model as well as a specific request for item pricing. Other examples of specific search queries are possible. The optional search query step may occur once a predetermined amount of information regarding the target object has been incorporated into the 3D model. For instance, once at least a rough point cloud 'shell' has been determined from the images, a search query may be transmitted. Alternatively, search queries may be transmitted on periodic basis once image acquisition of the target object begins. Thus, search queries may include partial 3D model information about a target object. Such partial 3D model search queries may be sufficient to enable useful search query results from a cloud-based server system, for instance.

Another optional step in the disclosed method includes receiving a search query result at the mobile device. The search query result may be a response from a server or any other computing device. The search query result may include, depending upon the circumstances, i) information regarding the target object (e.g., pricing, location, size, and model number of the target object, etc.); ii) information regarding objects similar to the target object; and/or iii) a suggestion to acquire further images of the target object. The optional method step may be performed on a continuous basis depending on the frequency of the transmitted search query results. Thus, a user may be notified via his/her mobile device that further images need to be captured. Other feedback types via search query results are possible.

In one example of the optional method steps, further 3D model data may be needed to disambiguate the target object from other similar objects in a shape-search database, such as the shape-search database described in reference to Figure 1A. For instance, with respect to the captured images of the stapler 308 in Figure 3A, various parts of the 3D model of the stapler 308 may be incomplete, for instance, because the backside of the stapler may not be in the field of view of the front-facing camera 304.

A search query result may be received to suggest further image acquisition from a particular viewpoint of the target object. In response, the mobile device may provide feedback to a user of the mobile device to move it so further images may be acquired in order to fill in the missing 3D model data. For instance, the mobile device may receive a suggestion to capture more images of the backside of the stapler 308 and the mobile device may capture images from a new perspective in order to complete the 3D model data, for instance as shown in Figure 3D. Subsequently, new data may be added to the 3D model and a new search query or search queries may be transmitted in order to obtain a more substantive search query result.

Other search query result types are possible. For instance, the search query result may include information about the target object. From the above example, a stapler manufacturer, stapler model, and purchase locations may be included in the search query result. Further, information about objects similar to the target object may be included in the search query result. For instance, the search query result may include information about stapler with a similar body style to the target object.

Example methods, such as method 400 of Figure 4, may be carried out in whole or in part by the mobile device. Accordingly, such methods may be described by way of example herein as being implemented by the mobile device. However, it should be understood that an example method may be implemented in whole or in part by other computing devices. For instance, an example method may be implemented in whole or in part by a cloud-based server system, which receives data from a device such as the mobile device. In other embodiments, an example method may be implemented in whole or in part by one or more different computing devices such as a mobile phone, a tablet computer, and/or a laptop or desktop computer. Other examples of computing devices or combinations of computing devices that can implement steps of an example method are possible.

Those skilled in the art will understand that there are other similar methods that may describe illuminating a target object with light fields generated by a multi-element display of a mobile device, capturing images based on the portion of the light field reflected from the target object and determining a 3D model of the target object based on the images. Those similar methods are contemplated implicitly herein.

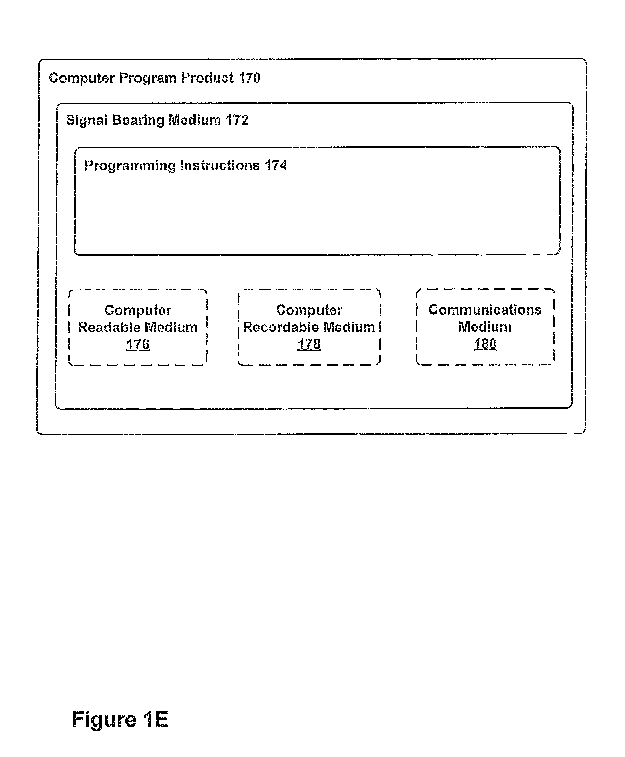

In some embodiments, the disclosed methods may be implemented as computer program instructions encoded on a non-transitory computer-readable storage media in a machine-readable format, or on other non-transitory media or articles of manufacture. Figure 1E is a schematic illustrating a conceptual partial view of an example computer program product that includes a computer program for executing a computer process on a computing device, arranged according to at least some embodiments presented herein.

In one embodiment, the example computer program product 170 is provided using a signal bearing medium 172. The signal bearing medium 172 may include one or more programming instructions 174 that, when executed by one or more processors may provide functionality or portions of the functionality described above with respect to Figure 1A-D and Figures 2-4. In some examples, the signal bearing medium 172 may encompass a computer-readable medium 176, such as, but not limited to, a hard disk drive, a Compact Disc (CD), a Digital Video Disk (DVD), a digital tape, memory, etc. In some implementations, the signal bearing medium 172 may encompass a computer recordable medium 178, such as, but not limited to, memory, read/write (R/W) CDs, R/W DVDs, etc. In some implementations, the signal bearing medium 172 may encompass a communications medium 180, such as, but not limited to, a digital and/or an analog communication medium (e.g., a fiber optic cable, a waveguide, a wired communications link, a wireless communication link, etc.). Thus, for example, the signal bearing medium 172 may be conveyed by a wireless form of the communications medium 180.

The one or more programming instructions 174 may be, for example, computer executable and/or logic implemented instructions. In some examples, a computing device such as the computing device 150 of Figure 1C may be configured to provide various operations, functions, or actions in response to the programming instructions 174 conveyed to the computing device 150 by one or more of the computer readable medium 176, the computer recordable medium 178, and/or the communications medium 180.

The non-transitory computer readable medium may also be distributed among multiple data storage elements, which may be remotely located from each other. The computing device that executes some or all of the stored instructions may be a mobile device, such as the mobile device 200 illustrated in Figure 2A. Alternatively, the computing device that executes some or all of the stored instructions may be another computing device, such as the server 104 illustrated in Figure 1A.

The above detailed description describes various features and functions of the disclosed systems, devices, and methods with reference to the accompanying figures. While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A mobile device, comprising:
a multi-element display, wherein the multi-element display is configured to generate a light field, wherein at least a portion of the light field reflects from a target object;
a camera, wherein the camera is configured to capture a plurality of images based on the portion of the light field reflected from the target object, and to capture the plurality of images synchronized to at least one modulation of the light field; and
a controller, wherein the controller is configured to receive a 3D model of the target object based on the plurality of images, wherein the 3D model comprises three-dimensional shape and color information about the target object, wherein the controller is further configured to determine, based on the 3D model, at least one of a shape of the target object, an appearance of the target object, and a material of the target object.

2. The mobile device of claim 1, wherein the controller is further configured to:
transmit a search query, wherein the search query comprises the 3D model; and
receive a search query result.

3. The mobile device of claim 1 or claim 2, further comprising a projector configured to provide a second light field toward the target object.

4. The mobile device of any preceding claim, wherein the multi-element display comprises a plurality of light-emitting diodes.

5. The mobile device of any preceding claim, wherein the light field comprises at least one of an array of dots, an array of stripes, a grid pattern, a concentric circle pattern, an airy disk, and an interference pattern.

6. The mobile device of any preceding claim, wherein the light field is configured to provide a majority of photons incident on the target object compared to ambient light sources.

7. The mobile device of any preceding claim, wherein the mobile device comprises a first side and a second side opposite the first side, wherein the multi-element display and the camera are positioned on the first side.

8. The mobile device of any preceding claim, wherein the controller is configured to modulate the multi-element display such that the light field exhibits at least one modulation, and wherein the camera is configured to capture the plurality of images synchronously with the at least one modulation of the light field.

9. The mobile device of any preceding claim, wherein the at least one modulation of the light field comprises changing a color content of the light field, and wherein optionally, the controller is further configured to determine the material of the target object based on the color content of the light field and the plurality of images of the target object.

10. The mobile device of any preceding claim, wherein the at least one modulation of the light field comprises changing luminous intensity of the light field.

11. The mobile device of any preceding claim, further comprising a light modifier coupled to the multi-element display, wherein the light modifier is configured to modify light generated by the multi-element display, and wherein optionally, the light modifier comprises one or more of a grid, a grating, and a diffractive optical element.

12. The mobile device of any preceding claim, further comprising a motorized mount, wherein the mobile device is configured to fixedly attach to the motorized mount and wherein the controller is configured to control the motorized mount so as to move the mobile device between different fields of view, wherein the camera is further configured to capture a plurality of images from the different fields of view and wherein the controller is further configured to determine the 3D model of the target object based on the plurality of images from the different fields of view.

13. The mobile device of any preceding claim, wherein the controller is further configured to determine a texture of the 3D model based on the plurality of images of the target object, and wherein the material of the target object is determined based on the texture of the 3D model.

14. The mobile device of any preceding claim, wherein the controller is further configured to determine a reflectivity of the 3D model based on the plurality of images of the target object, and wherein the material of the target object is determined based on the reflectivity of the 3D model.

15. A method, comprising:
illuminating a target object with a mobile device, wherein the mobile device comprises a multi-element display and a camera, wherein the multi-element display is configured to generate a modulated light field, wherein the modulated light field illuminates the target obj ect;
capturing, using the camera, a plurality of images of the target object, wherein capture of the plurality of images is configured to be synchronized to at least one modulation of the modulated light field; and
receiving a 3D model of the target object based on the plurality of images, wherein the 3D model comprises three-dimensional shape and color information about the target object; and
determining, based on the 3D model, at least one of a shape of the target object, an appearance of the target object, and a material of the target object.

16. The method of claim 15, further comprising determining a texture of the 3D model based on the plurality of images of the target obj ect, and wherein determining the material of the target object is based on the texture of the 3D model.

17. The method of claim 15 or claim 16, further comprising determining a reflectivity of the 3D model based on the plurality of images of the target object, and wherein determining the material of the target object is based on the reflectivity of the 3D model.

18. The method of any of claims 15 to 17, further comprising determining a color of the 3D model based on the plurality of images of the target object, and wherein determining the material of the target object is based on the color of the 3D model.

19. The method of any of claims 15 to 18, wherein the target object comprises a room and contents of the room, and wherein receiving the 3D model of the target object comprises determining a 3D model of the room.

20. A non-transitory computer readable medium having stored therein instructions executable by a computing device to cause the computing device to perform functions, the functions comprising the steps of the method of any of claims 15 to 19:
